Europäisches Patentamt

European Patent Office

Office européen des brevets

(11) Veröffentlichungsnummer : **0 222 090**
**B1**

(12) # EUROPÄISCHE PATENTSCHRIFT

(45) Veröffentlichungstag der Patentschrift :
23.11.89

(21) Anmeldenummer : 86112012.9

(22) Anmeldetag : 29.08.86

(51) Int. Cl.⁴ : **B 29 B 9/06**

(54) **Lochplatte für die Unterwassergranulierung von Kunststoffsträngen.**

(30) Priorität : **14.09.85 DE 3532937**

(43) Veröffentlichungstag der Anmeldung :
**20.05.87 Patentblatt 87/21**

(45) Bekanntmachung des Hinweises auf die Patenterteilung : **23.11.89 Patentblatt 89/47**

(73) Patentinhaber : **Werner & Pfleiderer GmbH**
**Theodorstrasse 10 Postfach 30 12 20**
**D-7000 Stuttgart 30 (DE)**

(72) Erfinder : **Lambertus, Friedrich, Dipl.-Ing.**
**Artusweg 15**
**D-7000 Stuttgart 30 (DE)**

(84) Benannte Vertragsstaaten :
**DE FR IT SE**

(56) Entgegenhaltungen :
**DD–A– 98 232**
**DD–A– 99 530**
**DE–A– 2 236 823**
**US–A– 4 378 964**

**Beschreibung**

Die Erfindung betrifft eine Lochplatte für die Unterwassergranulierung von Kunststoffsträngen entsprecht der im Oberbegriff des Patentanspruches 1 vorausgesetzten Art.

Eine derartige Lochplatte ist aus der DE-OS 22 36 823 bekannt. Hierbei besteht die Schneidplatte aus einem an der Grundplatte flächig anliegenden und verschraubbaren Einsatz, wobei der die Strangpressdüsen umfassende Teil der Schneidplatte mit der Grundplatte einen sowohl in Längs- als auch in Querrichtung der Strangpressdüsen sich erstreckenden, mit schlecht wärmeleitendem Material gefüllten Spalt einschließt, um einen unzuträglichen Wärmeabfluß zur Schneidplatte zu unterbinden. Durch den Kontakt der beheizbaren Grundplatte mit der Befestigungsfläche der Schneidplatte bildet sich in dieser gegenüber deren kühlbarer Oberfläche ein hohes Temperaturgefälle aus, sodaß die Schneidfläche und damit die Messerlaufbahn aufgrund unkontrollierter Werkstoffausdehnungen erheblich beeinträchtigt wird. Hierbei kommt es vielfach zu einer Wölbung der Schneidfläche, weil die flächige Befestigung der Schneidplatte an der Grundplatte dem Ausgleich von in radialer Richtung, d. h. quer zu den Strangpressbohrungen erfolgenden Wärmedehnungen widersteht. Dieser Ausgleich erfolgt vielmehr über die leicht nachgebende Isolierschicht, sodaß sich die Schneidfläche von der Grundplatte durch Wärmedehnung abhebt.

Der Erfindung liegt die Aufgabe zugrunde, diesem Nachteil abzuhelfen und eine Lochplatte zu schaffen, die einen Ausgleich im Bereich der Schneidplatte auftretender Wärmedehnungen ohne Beeinträchtigung der Schneidplatte und der Wärmedämmung ermöglicht.

Diese Aufgabe wird gemäß dem kennzeichnenden Teil von Anspruch 1 gelöst.

Die erfindungsgemäße Ausgestaltung der Lochplatte ermöglicht eine feste und spannungsfreie metallische Verbindung der Schneidplatte mit der Grundplatte trotz der im Betriebszustand vorherrschenden Temperaturunterschiede zwischen beiden Vorrichtungsteilen, da diese mehrfach so gegeneinander abgestützt sind, daß die innerhalb der Schneidplatte auftretenden Wärmedehnungen sich in kleinsten Teilbereichen der Schneidplatte ausgleichen können. Hierbei hat sich überraschend gezeigt, daß die als Stützelemente der Schneidplatte dienenden Stege jeweils einzeln diese Wärmedehnungen federnd ausgleichen, ohne daß es zu nachteiligen Verformungen der Schneideplatten-Oberfläche kommt. Der Isolierluftspalt bietet den hierfür erforderlichen Freiraum und ermöglicht eine diesen Bedürfnissen angepaßte Dimensionierung der Stege.

Zudem ist eine ausreichend stabile Abstützung der Schneidplatte gegeben.

Bei einer aus der US-A-4 378 964 bekannten Lochplatte ist die Schneidplatte unter Einschluß einer Isolierschicht durch Schweißverbindungen mit der Grundplatte dieser fest aufgesattelt, so daß Wärmedehnungen der Schneidplatte durch Abstützung mangels eines Freiraumes nicht aufgefangen werden können.

Aus der DD-A-99 530 ist weiterhin eine Granulierlochplatte bekannt, bei der zwar die Isolierschicht von Düsenrohren durchdrungen ist aber nur einen Teilbereich der Grund- und Schneidplatte überdeckt, und im übrigen über eine Zwischenplatte mit der Grundplatte fest verbunden ist, so daß durch über die Düsenrohre einfließende Wärme ein Aufwölben der Schneidplatte erfolgt.

Mit der Erfindung hingegen ist eine stabile metallische Abstützung der Schneidplatte über eine Vielzahl freitragender Stege erreicht, deren Widerstandsmoment so bemessen werden kann, daß eine ausreichende Elastizität für einen Wärmedehnungsausgleich innerhalb der Schneidplatte trotz Befestigung gegeben ist.

In einer praxisgerechten Ausbildung nach Anspruch 2 sind die Strangpreßdüsen innerhalb der Stege angeordnet, wobei der verbleibende dünnwandige und vom Isolierluftspalt umschlossene metallische Stegquerschnitt die Strangkühlung auf einen Bereich kurz vor Strangaustritt begrenzt und den Wärmeübergang aus dem Strangeinlaufbereich auf ein Mindestmaß vermindert.

Eine weitere Ausbildung nach Anspruch 3 ermöglicht im Bedarfsfalle die Nutzung des durch den Isolierluftspalt geschaffenen Freiraumes zum Zwecke der Temperierung der Schneidplatte, um diese bei sehr hoher Temperaturdifferenz gegenüber der Grundplatte gezielt abzuschirmen.

Eine Ausgestaltung der Stege nach den Merkmalen des Anspruches 4 gestattet eine stabile Verankerung in der Grundplatte wie auch in der Schneidplatte, sodaß eine ausreichende Befestigung der Schneidplatte gewährleistet ist. Diese erfolgt beispielsweise durch eine metallische Verbindung zwischen den Stegen und den Platten mittels Hartlot.

Mit den Merkmalen des Anspruches 5 ist neben einer fertigungstechnisch günstigen Gestaltungsweise zugleich eine Stegausbildung mit geringstmöglichem und von der Strangführung unbehelligtem Querschnitt bei hoher mechanischer Belastbarkeit erreicht.

Dieser Vorteil ist in besonderem Maße auch durch eine weitere Ausgestaltung nach den Merkmalen des Anspruches 6 erreicht.

Die Erfindung wird nachfolgend an Hand eines in der Zeichnung dargestellten Ausführungsbeispiels näher erläutert.

Hierbei zeigen

Fig. 1 eine an einen Schneckenextruder anflanschbare Unterwasser-Granuliervorrichtung im Längsschnitt;

Fig. 2 eine Teilansicht der Granuliervorrichtung nach Fig. 1 ohne Abdeckung;

Fig. 3 einen Teilausschnitt der Granuliervorrichtung nach Fig. 1 in vergrößertem Maßstab;

Fig. 4 eine Einzelheit A der Granuliervorrichtung gemäß Fig. 3 in einer weiteren Ausbildung der Stege und der Strangpressdüsen.

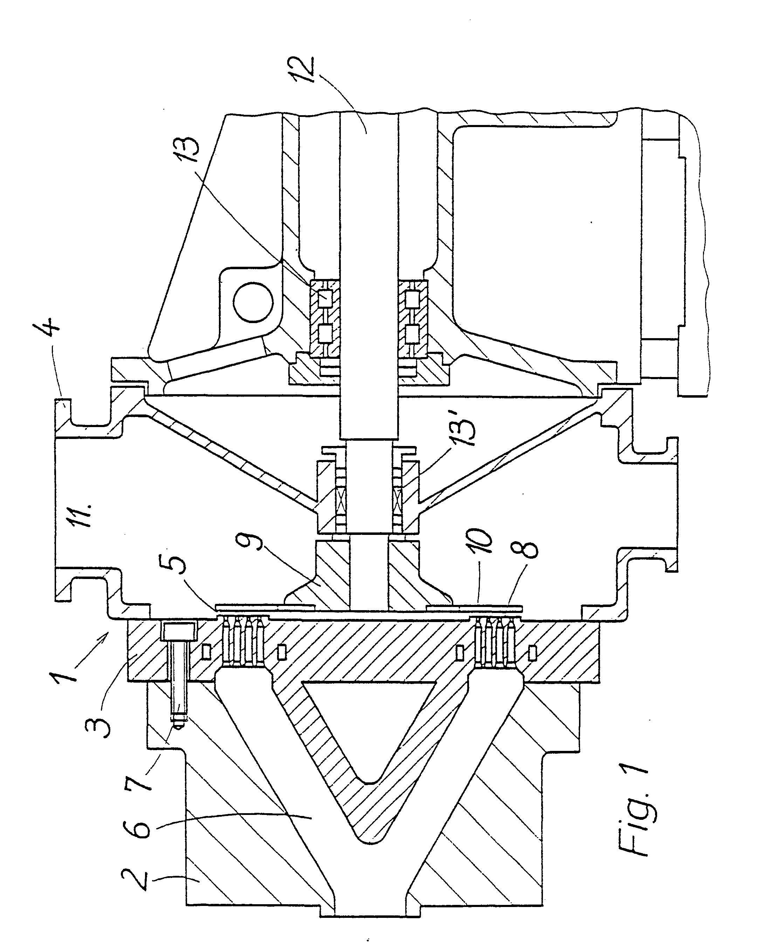

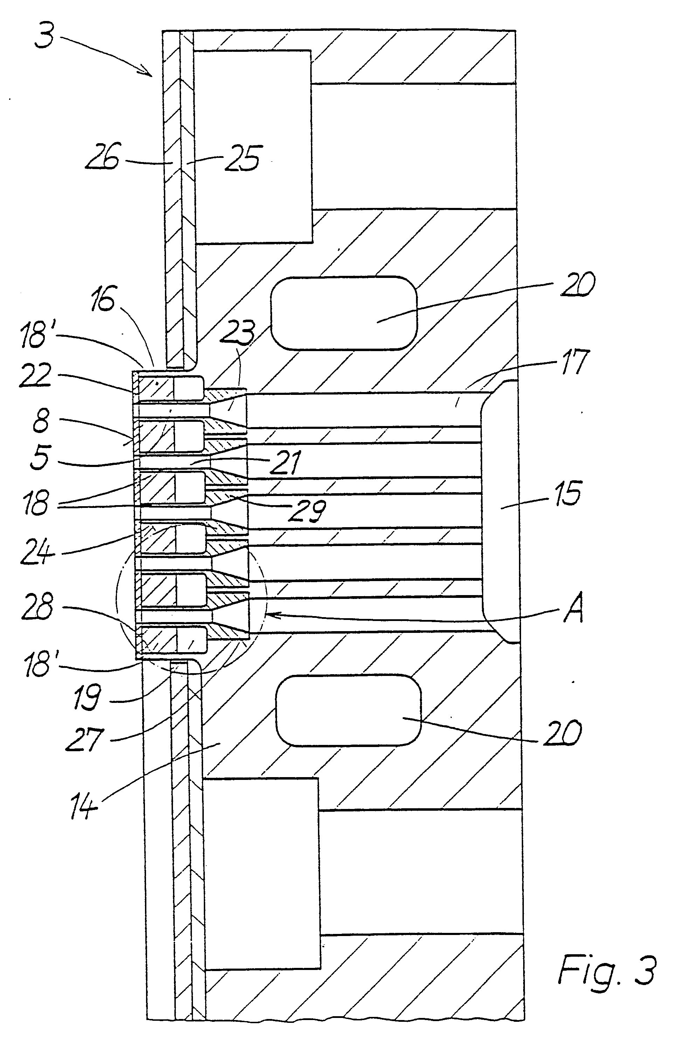

Die in Fig. 1 gezeigte Granuliervorrichtung 1 weist eine mit dem Kopfteil 2 eines nicht näher dargestellten Schneckenextruders verbundene Lochplatte 3 auf, die mittels Strangpressdüsen 5 den aus dem Kopfteil 2 über Kanäle 6 ausgepreßten Schmelzestrom in eine Granulierhaube 4 überleitet.

Die Lochplatte 3 ist hierbei mittels Schraubverbindung 7 dicht an das Kopfteil 2 angeflanscht.

Der durch die Strangpreßdüsen 5 geleitete Schmelzestrom tritt an der Schneidfläche 8 der Lochplatte 3 im Bereich der Messerlaufbahn eines Messerkopfes 9 aus, wobei dessen dicht an der Schneidfläche 8 anliegende Schneidmesser 10 den Schmelzestrom zu Granulat zerteilen. Das Granulat wird anschließend durch das die Granulierhaube 4 füllende Kühlwasser über eine Austrittsöffnung 11 abgeführt. Der Antrieb des Messerkopfes 9 erfolgt über eine Welle 12, die in Wälzlagern 13, bzw. 13' drehbeweglich geführt ist.

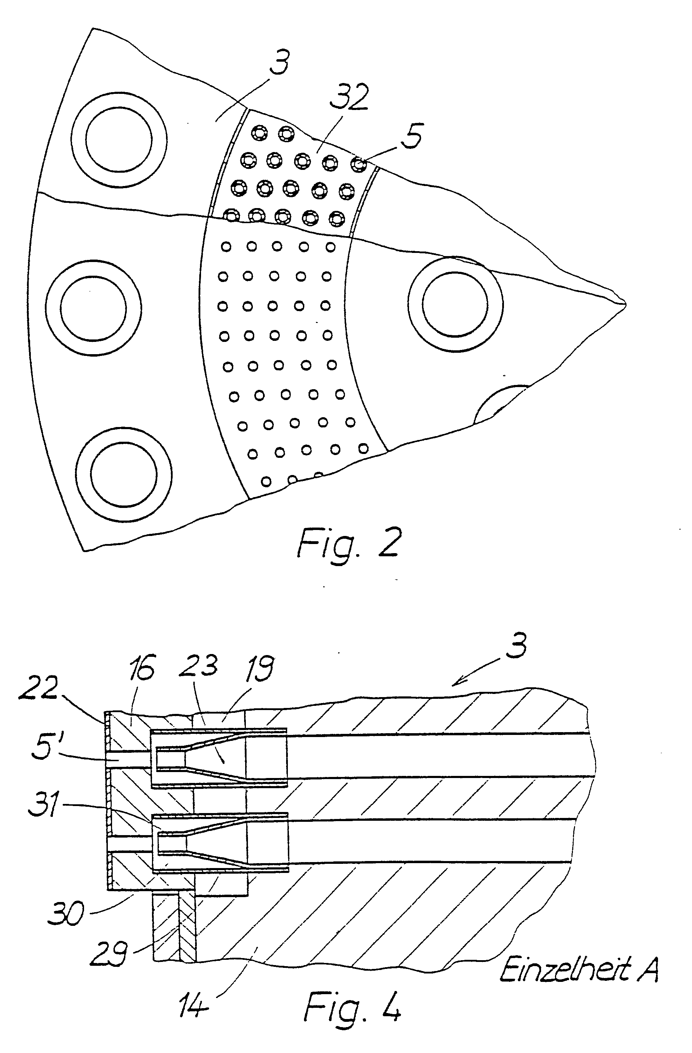

Die Strangpreßdüsen 5 sind wie insbesondere Fig. 2 zeigt, entsprechend der Messerlaufbahn des Messerkopfes 9 in der Lochplatte 3 auf einer Kreisringfläche 32 angeordnet.

Wie in Fig. 3 des näheren dargestellt ist, besteht die Lochplatte 3 in ihrem Aufbau aus einer Grundplatte 14 mit einem Verteilerkanal 15 in den die Kanäle 6 des Kopfteiles 2 einmünden, sowie einer Schneidplatte 16 in die Einlaufkanäle 17 zur Schmelze-Beschickung der Strangpreßdüsen 5 über deren jeweilige Einlaufkonen 23 einmünden.

Die Verbindung der Schneidplatte 16 mit der Grundplatte 14 erfolgt über eine Anzahl Stege 18, die mittels Einsätze 29 in zylindrischen Ausnehmungen 27 der Grundplatte 14 sowie in zylindrischen Ausnehmungen 24 der Schneidplatte 16, fest verankert sind.

Eine solche Verankerung der Stege 18 in beiden Platten ist beispielsweise mittels einer Hartlot-Verbindung erreicht. Zwischen der Grundplatte 14 und der Schneidplatte 16 befindet sich ein Isolier-Luftspalt 19, der die Schneidplatte 16 im wesentlichen überdeckt. Der hierbei geschaffene Freiraum zwischen der mittels Heizkanälen 20 beheizten Grundplatte 14 und der mittels Kühlwasser über die Schneidfläche 8 gekühlten Schneidplatte 16 verhindert nicht nur den unmittelbaren Wärmeübergang zwischen beiden Platten, sondern zugleich den Aufbau von Wärmespannungen in der Schneidplatte 16 durch deren Abstützung über die freitragenden Stege 18. Die Stege 18 sind mit Durchtrittsbohrungen 21 versehen, sodaß hierdurch Strangpreßdüsen 5 gebildet sind. Die Stege 18 sind im Bereich des Isolierluftspaltes 19 im Querschnitt so bemessen, daß sie ohne weiteres Wärmedehnungen der Schneidplatte 16, hervorgerufen durch die im Betriebszustand vorhandene relativ hohe Temperaturdifferenz zwischen der Grundplatte 14 und der Schneidplatte 16 rasch auszugleichen vermögen. Um dies zu erreichen, bemisst sich der Isolierluftspalt 19 mit einer Spalttiefe bis zu 6 mm.

Die Schneidfläche 8 der Schneidplatte 16 ist mit einer hochfesten Verschleißschutzschicht 22 gepanzert, die aufgrund ihrer kristallinen Struktur Wärmespannungen nicht aufzunehmen vermag ohne Schaden zu nehmen. Dank der Elastizität der Stege 18, die in kleisten Flächenbereichen der Schneidplatte 16 solche Wärmespannungen abbauen, bleibt die Verschleißschutzschicht 22 hiervon unbelastet. Auch die Schneidfläche 8 erfährt keine Oberflächenveränderung, so daß eine ebene Messerlaufbahn gewährleistet ist und der Anstelldruck der Schneidmesser 10 trotz auftretender Wärmedehnungen unverändert bleibt.

Soweit der Isolier-Luftspalt 19 im Bedarfsfalle auch zur Temperierung der Schneidplatte 16 dienen soll, ist diese an ihrem jeweiligen Außenumfang durch einen freitragenden Steg 18' flüssigkeitsdicht begrenzt.

Auch hierbei ist der Querschnitt des Steges 18' durch eine Eindrehung 28 in der Grundplatte 14 so bemessen, daß dieser Wärmedehnungen der Schneidplatte 16 auszugleichen vermag.

Eine die Grundplatte 14 dämmende Isolierplatte 25 und diese wiederum schützende Stahlblech-Abdeckung 26 sind gegenüber der Schneidplatte 16 versenkt angeordnet.

Fig. 4 zeigt als Einzelheit A eine Ausführungsform der Lochplatte 3 mit den Isolierluftspalt 19 frei überdeckender Schneidplatte 16, die mittels freitragender rohrförmiger metallischer Einsätze 29 in der Grundplatte 14 fest abgestützt ist. Innerhalb dieser Einsätze 29 ist im Bereich des Isolierluftspaltes 19 und der Schneidplatte 16 jeweils ein ringförmiger Hohlraum 30 gebildet der durch den jeweiligen Einsatz 29 und einem Einlaufabschnitt 31 mit Einlaufkonus 23 für die Strangpressdüse 5' begrenzt ist. Auch hierbei weist der rohrförmige Einsatz 29 zumindest im Bereich des Isolierluftspaltes 19 einen geringsten Querschnitt auf, so daß ein freier Ausgleich der Wärmedehnungen innerhalb der Schneidplatte 16 und damit auch der Verschleißschutzschicht 22 gewährleistet ist.

Bei dieser Anordnung ist die Schmelzeführung vorteilhaft von der Abstützanordnung der Schneidplatte 16, die über die Einsätze 29 erfolgt, getrennt.

Die Bemessung der Einsätze 29 erfolgt so, daß eine ausreichend stabile, Spannungen ausgleichende Abstützung der Schneidplatte 16 gegeben ist. Außerdem bleibt der Wärmeübergang von der beheizten Grundplatte 14 zur Schneidplatte 16 auf ein Mindestmaß begrenzt, so daß sich im Bereich der Schneidplatte 16 problemlos eine gleichmäßige Temperatur abhängig von der Kühlwassertemperatur einstellt.

Wärmedehnungen die üblicherweise durch örtlich auftretende Temperaturdifferenzen innerhalb der Schneidplatte 16 auftreten, werden von den Stegen 18 und 18' bzw. den Einsätzen 29 aufgenommen, ohne daß sich Spannungen in der Schneidplatte 16 aufbauen.

## Patentansprüche

1. Lochplatte für die Unterwassergranulierung von Kunststoffsträngen, bestehend aus einer Grundplatte (14) mit einem Schmelze-Verteilerkanal (15), mehreren mit diesem verbundenen in Strangpreßdüsen (5) einer ringförmigen Schneidplatte (16) einmündenden im Mündungsbereich konisch sich verjüngenden Einlaufkanälen (1) mit in deren Bereich getrennt angeordneter Heizeinrichtung (20) und einer unmittelbar zwischen der Grundplatte und der Schneidplatte(16) in radialer Richtung sich erstreckender, von den Strangpreßdüsen (5) durchdrungener Isolierschicht, dadurch gekennzeichnet, daß die Isolierschicht aus einem die Schneidplatte (16) völlig überdeckenden Isolier-Luftspalt (19) gebildet ist, und daß die Schneidplatte (16) gegenüber der Grundplatte (14) mittels einer Vielzahl voneinander getrennter den Isolier-Luftspalt (19) überbrückender Stege (18) abgestützt ist, die unter Einschluß der konisch sich verjüngenden Einlaufkanäle (23) Einsätze (29) bilden.

2. Lochplatte nach Anspruch 1, dadurch gekennzeichnet, daß innerhalb der Stege (18) die Strangpreßdüsen (5) angeordnet sind.

3. Lochplatte nach Anspruch 1 oder 2, dadurch gekennzeichnet, daß der Isolier-Luftspalt (19) jeweils am Innen- und Außenumfang durch einen freitragenden, die schneidplatte (16) einschließenden Steg (18') begrenzt ist.

4. Lochplatte nach Anspruch 1, dadurch gekennzeichnet, daß die Einsätze (29) jeweils in Ausnehmungen (27) der Grundplatte (14) und Ausnehmungen (24) der Schneidplatte (16) eingefügt sind.

5. Lochplatte nach Anspruch 4, dadurch gekennzeichnet, daß die Einsätze (29) rohrförmig ausgebildet sind und bei Ausbildung eines ringförmigen Hohlraumes (30) jeweils längsaxial verlaufende rohrförmig gestaltete Einlaufabschnitte (31) mit Einlaufkonus (23) einschließen.

6. Lochplatte nach Anspruch 5, dadurch gekennzeichnet, daß die rohrförmigen Einsätze (29) zumindest im Bereich des Isolierluftspaltes (19) einen geringten Querschnitt aufweisen.

## Claims

1. Perforated plate for the underwater granulation of synthetic material strands and consisting of a base plate (14) with a molten mass distributor channel (15), several inlet channels (1), which are connected therewith, open into extrusion dies (5) of an annular cutting plate (16) and become narrower conically in the opening region, with a heating equipment (20) arranged separately in their region and an insulating layer which extends in radial direction directly between the base plate and the cutting plate (16) and is penetrated by the extrusion dies (5), characterised thereby, that the insulating layer is formed by an insulating air gap (19) completely covering the cutting plate (16) and that the cutting plate (16) is supported relative to the base plate (14) by means of a plurality of webs (18), which bridge over the insulating air gap (19) one separately from the other and form inserts (29) while including the conically narrowing inlet channels (23).

2. Perforated plate according to claim 1, characterised thereby, that the extrusion dies (5) are arranged within the webs (18).

3. Perforated plate according to claim 1 or 2, characterised thereby, that the insulating air gap (19) is bounded by a respective self-supporting web (18') including the cutting plate (16) at each of the inner and the outer circumference.

4. Perforated plate according to claim 1, characterised thereby, that the inserts (29) are each inserted into recesses (27) of the base plate (14) and recesses (24) of the cutting plate (16).

5. Perforated plate according to claim 4, characterised thereby, that the inserts (29) are constructed to be tubular and while forming an annular hollow space (30) each include respective tubularly structured inlet portions (31), extending axially in longitudinal direction, with inlet cone (23).

6. Perforated plate according to claim 5, characterised thereby, that the tubular inserts (29) display a smallest cross-section at least in the region of the insulating air gap (19).

## Revendications

1. Plaque à orifices multiples, ou plaque perforée, pour la granulation, en milieu aqueux, de joncs ou cordons de matière plastique, cette plaque consistant en une plaque (14) de base comportant un canal (15) répartiteur de la matière fondue, en plusieurs canaux (17) d'entrée, reliés à ce canal répartiteur, qui forment un rétrécissement conique dans la zone de leur embouchure dans les filières (5) d'extrusion de joncs ou cordons d'une plaque (16) annulaire de découpage, avec, dans la zone de ces canaux, un dispositif (20) de chauffage à disposition séparée, et en une couche d'isolation traversée par les filières (5) et s'étendant immédiatement, en direction radiale, entre la plaque de base et la plaque (16) de découpage, plaque perforée caractérisée en ce que la couche d'isolation est formée d'une fente ou intervalle (19) d'air d'isolation, recouvrant entièrement la plaque (16) de découpage, et en ce que la plaque (16) de découpage s'appuie contre la plaque (14) de base à l'aide d'un grand nombre de tiges (18) séparées les unes des autres et reliant en pont les extrémités de l'intervalle (19) d'air d'isolation, ces tiges formant, en incluant les canaux (23) d'entrée à rétrécissement conique, des garnitures (29) d'insertion.

2. Plaque perforée selon la revendication 1, caractérisée en ce que les filières (5) d'extrusion des joncs ou cordons sont disposées à l'intérieur des tiges (18).

3. Plaque perforée selon la revendication 1 ou 2, caractérisée en ce que l'intervalle (19) empli d'air d'isolation est délimité à chaque périphérie, interne et externe, par une tige (18′) en saillie libre, englobant la plaque (16) de découpage.

4. Plaque perforée selon la revendication 1, caractérisée en ce que les garnitures (29) d'insertion sont introduites à chaque fois dans des creux (27) de la plaque (14) de base et dans des creux (24) de la plaque (16) de découpage.

5. Plaque perforée selon la revendication 4, caractérisée en ce que les garnitures (29) d'insertion ont une forme tubulaire et, en formant un espace (30) creux annulaire, elles englobent à chaque fois des tronçons (31) tubulaires d'entrée, disposés dans le sens de l'axe longitudinal et comportant un cône (23) d'entrée.

6. Plaque perforée selon la revendication 5, caractérisée en ce que les garnitures (29) tubulaires d'insertion présentent, au moins dans la zone de l'intervalle (19) d'air d'isolation, une section transversale aussi petite que possible.

Fig. 1

EP 0 222 090 B1

*Fig. 3*

Fig. 2

Einzelheit A

Fig. 4